# EUROPEAN PATENT SPECIFICATION

(11) **EP 4 494 897 B1**
(45) Date of publication and mention of the grant of the patent: **03.06.2026**
(21) Application number: 24189641.4
(22) Date of filing: 19.07.2024
(51) Int. Cl.: B60B 27/00, B60B 35/12, B60B 35/16, B62D 49/00

(54) **WHEEL HUB OF AN AGRICULTURAL OR WORK VEHICLE AND HYDRAULIC OIL ACCUMULATION SYSTEM INCLUDING THE WHEEL HUB**
RADNABE EINES LANDWIRTSCHAFTLICHEN ODER ARBEITSFAHRZEUGS UND HYDRAULIKÖLSAMMELSYSTEM MIT DER RADNABE
MOYEU DE ROUE D'UN VÉHICULE AGRICOLE OU DE TRAVAIL ET SYSTÈME D'ACCUMULATION D'HUILE HYDRAULIQUE COMPRENANT LE MOYEU DE ROUE

(30) Priority: 21.07.2023 IT 202300015393
(43) Date of publication of application: 22.01.2025
(73) Proprietor: CNH Industrial Italia S.p.A., 10156 Torino (IT)
(72) Inventor: MIGLIORANZA, Francesco, 10156 Turin (IT); GAIOLA, Andrea, 10156 Turin (IT)
(74) Representative: CNH Industrial IP Department

(56) References cited:
- EP-A1- 3 144 161
- EP-A1- 3 985 272
- WO-A1-2014/155836
- US-A- 4 784 500
- US-B1- 8 882 208

## Description

### Field of the invention

The present invention relates to the field of wheel hubs of agricultural and work vehicles and the systems of accumulating hydraulic oil of an agricultural or work vehicle.

### State of the art

Agricultural vehicles or work vehicles are well known for moving materials and performing specific heavy duty tasks.

They are usually equipped with a transmission as shown for example in EP3985272A1. With reference to Figure 1, a prime mover E, generally an internal combustion engine, drives a variable displacement hydraulic pump HP in rotation, which feeds a hydraulic motor HM operatively connected to the hydraulic pump, defining a so-called hydrostat HY, wherein a forward hydraulic line F and a return hydraulic line R interconnect the hydraulic pump with the hydraulic motor. Agricultural or work vehicles also include a circuit for the implementation of "hydraulic services", i.e. hydraulic users, such as articulated arms, lifters, etc.

Generally, at least one additional hydraulic pump separate from the one of the hydrostat is provided to feed the hydraulic services.

The market request is to enhance the hydraulic capacity and the flow rate of the hydraulic pump, but also the maximum volume of oil that can be withdrawn and sent to the various hydraulic services.

The flow of oil to the hydraulic users can be increased by installing larger hydraulic pumps, however to increase the amount of oil available, it is necessary to increase the size of the tank where the oil is collected.

Generally, the hydraulic oil is collected in the tractor main body or transmission body. Regardless of the quantity of oil used to feed the various hydraulic services, it is always necessary to guarantee a minimum oil level in the transmission to safeguard the lubrication of the transmission itself, but at the same time, this oil level cannot exceed a predetermined limit recommended to contain the transmission power losses caused by the sloshing effect of the gears drowned in the oil.

Another possibility to increase the available oil capacity is to adopt a secondary/auxiliary tank but, in this case, it is necessary to evaluate the feasibility considering all the other devices that must be housed on-board the vehicle. Unless specifically excluded in the detailed description that follows, what is described in this chapter is to be considered as an integral part of the detailed description.

### Summary of the invention

The object of the present invention is to propose a way to store hydraulic oil without installing further tanks.

The basic idea of the present invention is to exploit a so-called intermediate chamber in an intermediate part of the wheel hub of an agricultural or work vehicle to realize a hydraulic oil tank.

More specifically, the hubs of work vehicles comprise a housing in which a portion of the transmission is housed in an oil bath. An axle comprises a pair of opposing bells and therefore, at least one gasket is provided for each of the two bells so as to define a central portion of the axle in which a bevel gear and/or a differential can be arranged lubricated in an oil bath.

At the free end of the bell there is a spindle support bearing. The bearing is grease lubricated which is held in place by a pair of seals to define a grease lubricated chamber.

Therefore, a first central area of the axle is defined, which confines a closed chamber to keep the axle differential in an oil bath and a third chamber, at the end of each hub, which confines the grease.

For each hub, an intermediate chamber is identified between the central area of the axle and the end area of the hub, in which a first circa radial opening is made, which allows the introduction or drawing off of hydraulic oil. A second opening is arranged to put the intermediate chamber in communication with the external environment by means of an aeration valve.

In other words, thanks to the present invention, an unused chamber, inside a wheel hub, is used as an auxiliary hydraulic tank of the vehicle transmission and/or of the hydraulic services.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Fig. 1 shows a diagram of the hydraulic transmission of an agricultural or work vehicle;

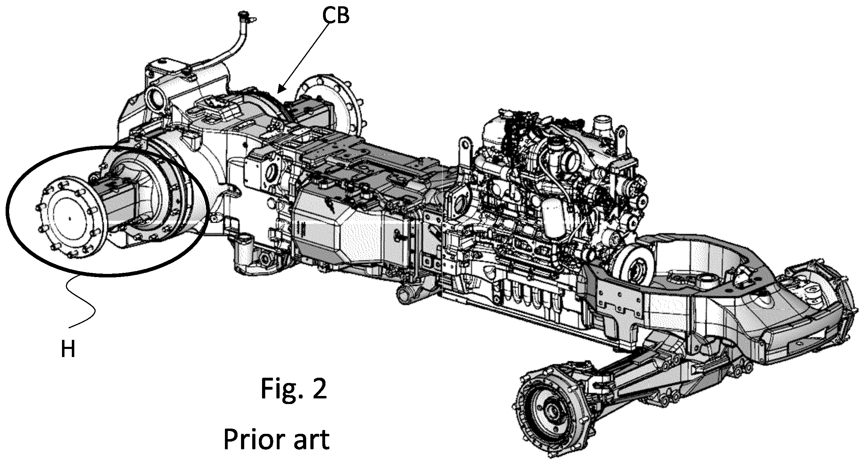

Fig. 2 shows an overall view of an example of propulsion system of an agricultural or work vehicle, according to the prior art;
Fig. 3 shows a wheel hub according to an axial section of the propulsion system of Fig. 1, but modified according to the present invention;
Fig. 4 shows a working or agricultural vehicle implementing the present invention;
Fig. 5 shows the overall view of Fig. 2, modified according to a variant of the present invention;
Fig. 6 schematically shows the transmission of figure 1 modified according to the present invention e
Fig. 7 shows an exemplary flow diagram of a control method of the lubrication system object of the present invention.

The same reference numbers and letters in the figures identify the same elements or components or functions.

It should also be noted that the terms "first", "second", "third", "superior", "inferior" and the like may be used herein to distinguish various elements. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description

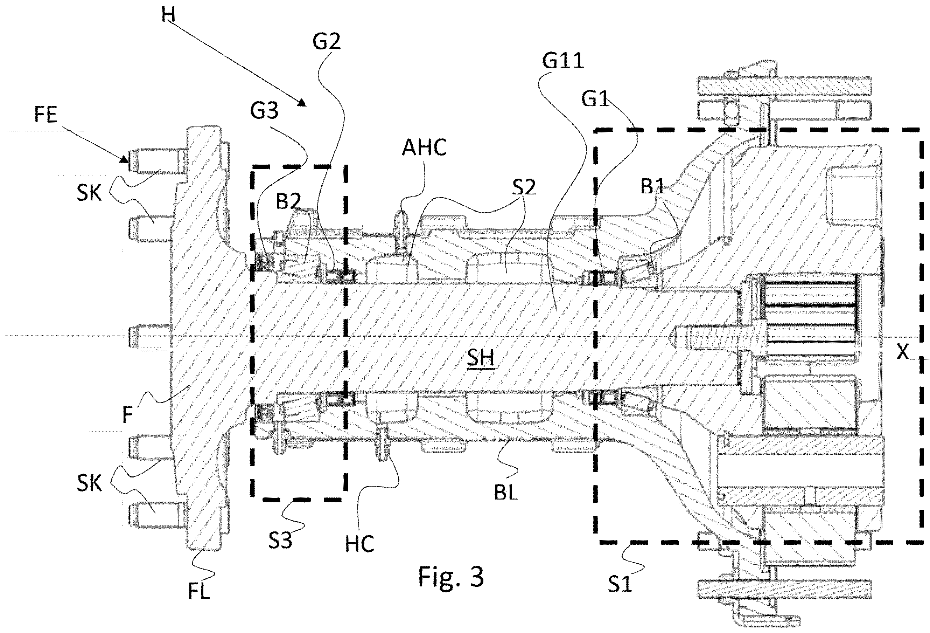

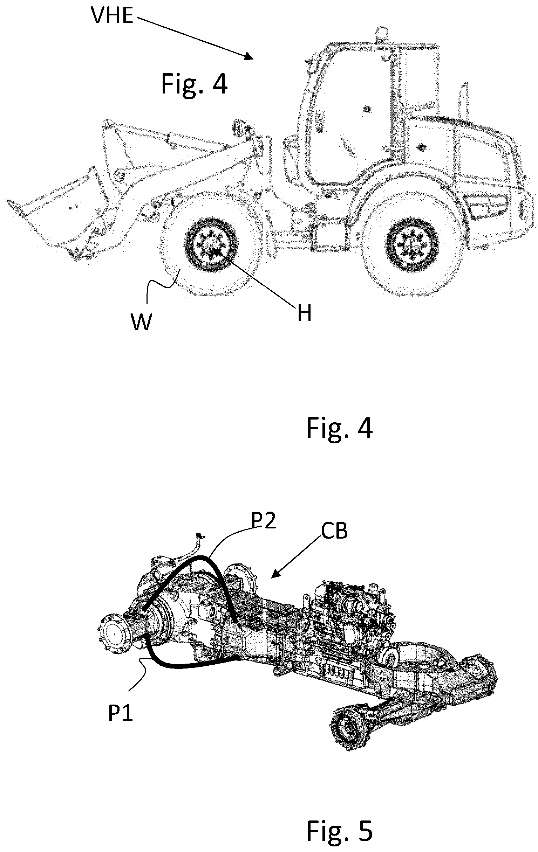

With reference to Fig. 3, the wheel hub H object of the present invention of an agricultural or work vehicle VEH is shown, exemplified in Fig. 4. The wheel hub comprises a fixed housing BL, defining an axis of development X. A spindle SH is arranged inside the housing and coaxially with it, which faces the outside of the housing by means of a flange FL integral with the spindle. The bell is tapered towards the free end FE from which the spindle SH protrudes with the relative flange FL necessary for coupling a vehicular wheel W.

The development axis X can also be an axis of rotation for the spindle and/or for at least one axial section of the bell.

The flange comprises mechanical connection means SK, for example pins or threaded holes, for fixing the rim of a wheel in a per se known way.

The spindle is rotatably associated with the bell by at least one pair of bearings B1, B2.

The external bearing B2 is arranged proximal to the free end FE of the hub H, while the internal bearing B1 is arranged proximal to the portion of the bell which widens to be connected to the central body CB of the vehicle propulsion system.

According to the development axis X, the external bearing is confined, in the axial direction, by an intermediate seal G2 and an external seal G3. It is clear that the "external" designation indicates the fact that the gasket G3 faces the external environment, while the intermediate gasket G2, or the internal gasket G1 described below, borders on the intermediate chamber S2, which is completely internal to the hub, as better specified below.

In the end chamber S3 defined by the pair of gaskets G2 and G3, the external bearing B2 is arranged lubricated with grease; therefore, the gasket G2 and G3 are sealing for the grease contained in the end chamber S3.

The internal bearing B1 supports the spindle SH proximal to the base of the bell which widens to be connected to the central body CB of the vehicle propulsion system.

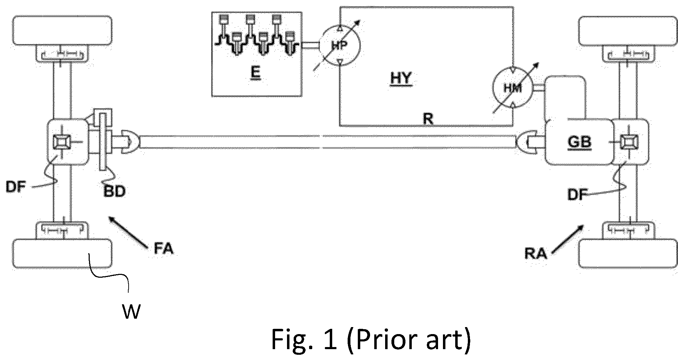

A gasket G1 separates the intermediate chamber S2 from a central chamber S1 of the axle, in which the internal bearing B1 is housed. The central chamber S1 is in an oil bath, therefore, the gasket G1 is oiltight. The central chamber S1 contains the hydraulic oil of the differential group DF shown schematically in figure 1. This chamber is completely distinct and separate from the intermediate chamber S2 in which the hydraulic oil of the hydraulic transmission is collected as in an auxiliary tank. According to the present invention, the bell is provided with a first opening HC, approximately radial, in correspondence with the intermediate chamber S2. The HC opening is associated with a hydraulic connection, indicated, for convenience, also HC.

In another point of the bell there is a second opening AHC, for example radially, to which an aeration valve is associated, also indicated, for convenience, AHC.

The air valve is configured to allow air to enter and leave the intermediate chamber while retaining the oil. Advantageously, the aeration valve allows the oil to flow towards the main tank housed in the central body CB, allowing air to enter the intermediate chamber from the outside.

The first hydraulic fitting HC is arranged to be connected, by means of an external pipe P1, made for example of rubber, to the central body CB of the propulsion system. Preferably, the first opening HC is arranged in a point such as to allow the natural outflow of the hydraulic oil from the hub towards the central body CB of the propulsion system due to the gravity force.

Advantageously, thanks to the present invention the previously unused intermediate chamber S2 is exploited to create an auxiliary hydraulic oil tank.

The intermediate chamber S2 fills and empties and the air valve AHC allows the inflow and outflow of oil according to the flow rate of the hydraulic pump which draws oil from the main tank.

A filter can be associated with the air valve to prevent the introduction of dust into chamber S2.

According to another preferred variant of the invention, the intermediate chamber is equipped with a further opening RHC to which a second hydraulic connector is associated, referred to as the opening RHC for convenience. Both the first and second hydraulic connectors HC and RHC are hydraulically connected with the main tank respectively in an upper part and in a lower part of the main tank CB, in operative conditions, by means of respective pipes P1 and P2.

It is worth pointing out that the present invention does not require any particular expedients, since the intermediate chamber S2 is at ambient pressure. It is only necessary to have a gasket G2 suitable for coming into contact with the hydraulic oil intended to be collected inside the intermediate chamber S2.

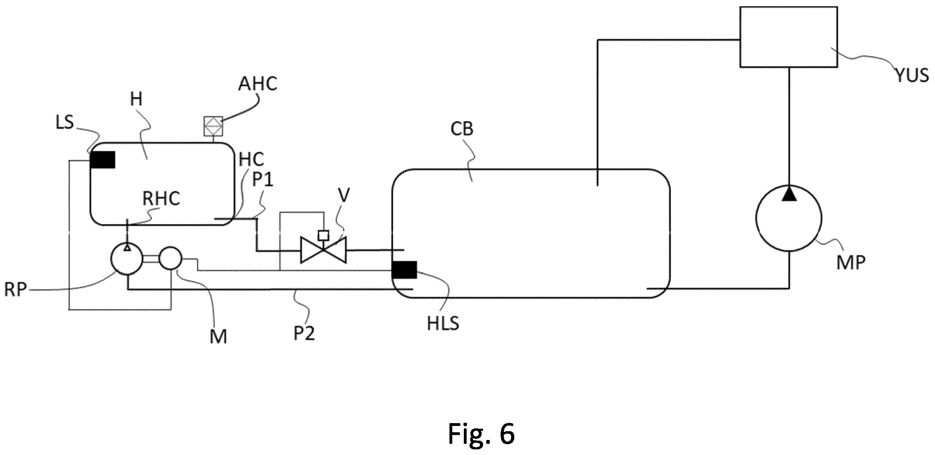

Preferably, the inflow of hydraulic oil from the hub to the main tank is controlled by a solenoid valve V, while the outflow is controlled by a hydraulic return pump RP driven in rotation by a relative motor M, which can be electric or hydraulic, as shown in figure 6.

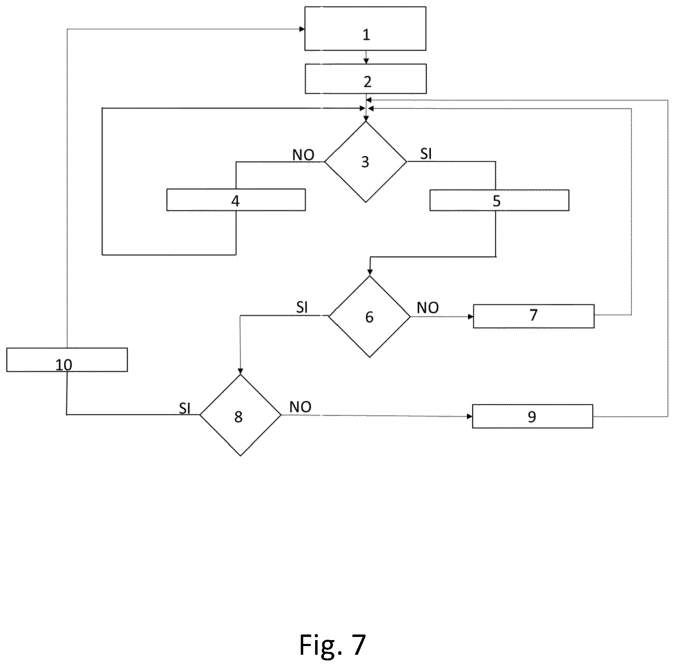

A logic for controlling the operation of the solenoid valve and the hydraulic return pump, hereinafter referred to as the "return pump", is shown in figure 7.

However, it is worth highlighting that the same logic of figure 7 can be applied using a single hydraulic connection and a bidirectional pump arranged to control both the inflow and outflow of hydraulic oil. Therefore, instead of controlling the opening of the solenoid valve, the pump RP is controlled so as to allow the inflow of hydraulic oil, while the control of the pump remains unchanged in the event of an outflow of hydraulic oil.

The control logic, in any case, is based on a pair of level sensors HLS and LS associated respectively with the central body CB of the transmission and with the wheel hub H.

The first sensor HLS is a sensor capable of detecting a minimum and a maximum level of the hydraulic oil contained in the main tank housed in the central body of the hydraulic transmission.

The second sensor LS, on the other hand, is only able to detect a maximum oil level inside the intermediate chamber S2 of the hub.

Fig. 6 also shows a main hydraulic pump MP arranged to feed at least one hydraulic user YUS, such as for example a hydraulic lift, an articulated arm, a flattening blade, etc..

With reference to Fig. 7, an example of hydraulic oil inflow/outflow control logic is now illustrated.
Step 1: START
Step 2: activation of the main pump,
Step 3: Checking if the oil level in the main body is above the minimum level, if not
Step 4: opening of the solenoid valve and return to Step 3, otherwise (YES),
Step 5: closing or maintaining closing of the solenoid valve V, and then
Step 6: checking if the oil level in the main body is lower than the maximum level, if not (NO) Step 7: turn off or keep off the RP return pump and go back to Step 3, otherwise (YES)
Step 8: checking if the oil level inside the intermediate chamber S2 has reached its maximum level, if not (NO) then Step 9: Activation or keeping active of the return pump RP and return to step 3, otherwise (YES)
Step 10: turning off or keeping off the return pump and return to step 1.

In summary, when the oil level inside the main tank drops below a first predetermined threshold, then hydraulic oil is recalled, inflow, from the intermediate chamber S2, vice versa when the oil level exceeds a second threshold higher than the first threshold, then, the excess oil is sent, outflow, to the intermediate chamber. In any case, the outflow is stopped if a predetermined maximum level relative to the intermediate chamber is reached.

The present invention also relates to an agricultural or work vehicle comprising a wheel hub comprising a bell arranged to support a spindle and in which an intermediate chamber is formed between the bell and the spindle operatively connected to a main tank of hydraulic oil by means of at least one radial opening in the bell and more particularly by means of an external pipe P1, P2 arranged to put the intermediate chamber in communication with the main tank.

More specifically, the main hydraulic oil tank is contained in the vehicle transmission housing.

Variants of the non-limiting example described are possible, without however departing from the scope of protection of the present invention, which is defined by the contents of the claims.

From the description given above, the person skilled in the art is capable of realizing the object of the invention without introducing further constructive details.

## Claims

1. Wheel hub (H) of an agricultural or work vehicle comprising a fixed bell (BL) defining a development axis (X), inside which a spindle (SH) is coaxially associated in a rotatable manner, which faces the outside of the bell by means of a relative flange (FL) arranged for coupling to a vehicular propulsion wheel, a sealed intermediate chamber (S2) being defined inside the hub, and **characterised in that** the bell includes at least a first circa radial through opening (HC, RHC), equipped with a relative first hydraulic connector, arranged at said intermediate chamber, for introducing or drawing off hydraulic oil and at least one second aeration through opening (AHC), circa radial.

2. A hub according to claim 1, wherein said second aeration opening is provided with an aeration valve arranged to allow the passage of air, but not of oil.

3. Hub according to claim 1, wherein the hub further comprises a third opening (RHC) and a related second hydraulic connector.

4. Hub according to any one of claims 1 - 3, wherein between said bells and said spindle it comprises in succession
- a first chamber (S1) for containing the hydraulic oil of a differential unit (DF), and in which a first bearing (B1) is housed in said first chamber for a rotating coupling of the spindle to the bell,
- said intermediate chamber (S2), and
- a third chamber (S3) in which a second bearing (B2) and a relative lubricating grease are housed.

5. Hub according to claim 4, wherein said third chamber is disposed proximate to the free end (FE) of the hub when in operative conditions.

6. Hub according to any one of the preceding claims, wherein said intermediate chamber (S2) is axially confined by a pair of hydraulic oil-tight seals (G1, G2).

7. Vehicle axle comprising a pair of opposed hubs (H) associated so as to centrally define a chamber in an oil bath for housing a differential unit (DF), wherein each of said hubs is according to any one of claims 1 to 6.

8. Agricultural or work vehicle (VEH) comprising a propulsion transmission housed in a main tank of hydraulic oil (CB) and a wheel hub (H) according to any of the claims from 1 to 6, wherein said first opening is operationally connected with its main tank through at least one hydraulic connection (P1, P2) and by means of control (V, RP) means for controlling inflow and outflow of hydraulic oil between the intermediate chamber (S2) and the main tank (CB) of hydraulic oil.

9. Vehicle according to claim 8, wherein said hydraulic oil inflow and outflow control means comprise a solenoid valve (V) arranged on a first hydraulic connection (P1) and a return pump (RP) arranged on a second hydraulic connection (P2), both hydraulic connections being arranged to interconnect said intermediate chamber (S2) with said main tank by means of said first and second hydraulic connectors.

10. A method of controlling the inflow and outflow of hydraulic oil between the intermediate chamber (S2) of a hub and a main hydraulic oil tank of an agricultural or work vehicle according to claim 9, the method comprising
- controlling of the solenoid valve to allow the inflow of oil to the main tank when the oil level inside the main tank drops below a predetermined first threshold and vice versa
- controlling of the return pump to transfer the hydraulic oil from the main tank to the intermediate chamber when the oil level inside the main tank exceeds a second threshold higher than the first threshold, and wherein the oil transfer process is stopped when a predetermined maximum level is reached inside the intermediate chamber.

## Patentansprüche

1. Radnabe (H) eines landwirtschaftlichen oder Arbeitsfahrzeugs, umfassend eine feststehende Glocke (BL), die eine Entwicklungsachse (X) definiert, in der eine Spindel (SH) koaxial in drehbarer Weise angeordnet ist, die mittels eines jeweiligen Flansches (FL), der zur Kopplung mit einem Fahrzeugantriebsrad angeordnet ist, zur Außenseite der Glocke weist, wobei eine abgedichtete Zwischenkammer (S2) innerhalb der Nabe definiert ist, und **dadurch gekennzeichnet, dass** die Glocke mindestens eine erste etwa radiale Durchgangsöffnung (HC, RHC), die mit einem jeweiligen ersten Hydraulikverbinder, der an der Zwischenkammer angeordnet ist, zum Einführen oder Abziehen von Hydrauliköl ausgestattet ist, und mindestens eine zweite Belüftungsdurchgangsöffnung (AHC), etwa radial, aufweist.

2. Nabe nach Anspruch 1, wobei die zweite Belüftungsöffnung mit einem Belüftungsventil versehen ist, das angeordnet ist, um den Durchgang von Luft, aber nicht von Öl zu ermöglichen.

3. Nabe nach Anspruch 1, wobei die Nabe ferner eine dritte Öffnung (RHC) und einen zugehörigen zweiten Hydraulikverbinder umfasst.

4. Nabe nach einem der Ansprüche 1 bis 3, wobei sie zwischen den Glocken und der Spindel nacheinander umfasst
- eine erste Kammer (S1) zur Aufnahme des Hydrauliköls einer Differentialeinheit (DF) und in der ein erstes Lager (B1) in der ersten Kammer zu einer drehbaren Kopplung der Spindel mit der Glocke untergebracht ist,
- die Zwischenkammer (S2) und
- eine dritte Kammer (S3), in der ein zweites Lager (B2) und ein entsprechendes Schmierfett untergebracht sind.

5. Nabe nach Anspruch 4, wobei die dritte Kammer in der Nähe des freien Endes (FE) der Nabe angeordnet ist, wenn sie sich unter Betriebsbedingungen befindet.

6. Nabe nach einem der vorstehenden Ansprüche, wobei die Zwischenkammer (S2) axial durch ein Paar hydrauliköldichter Dichtungen (G1, G2) begrenzt ist.

7. Fahrzeugachse, umfassend ein Paar gegenüberliegender Naben (H), die so zugeordnet sind, dass sie zentral eine Kammer in einem Ölbad zum Unterbringen einer Differentialeinheit (DF) definieren, wobei jede der Naben gemäß einem der Ansprüche 1 bis 6 ist.

8. Landwirtschaftliches oder Arbeitsfahrzeug (VEH), umfassend ein Antriebsgetriebe, das in einem Haupttank für Hydrauliköl (CB) untergebracht ist, und eine Radnabe (H) nach einem der Ansprüche 1 bis 6, wobei die erste Öffnung durch mindestens eine Hydraulikverbindung (P1, P2) und mittels Steuerungsmitteln (V, RP) zum Steuern des Zu- und Abflusses von Hydrauliköl zwischen der Zwischenkammer (S2) und dem Haupttank (CB) für Hydrauliköl betriebsmäßig mit ihrem Haupttank verbunden ist.

9. Fahrzeug nach Anspruch 8, wobei die Hydraulikölzufluss- und -abflusssteuermittel ein Magnetventil (V), das an einer ersten Hydraulikverbindung (P1) angeordnet ist, und eine Rückförderpumpe (RP), die an einer zweiten Hydraulikverbindung (P2) angeordnet ist, umfassen, wobei beide Hydraulikverbindungen angeordnet sind, um die Zwischenkammer (S2) mittels der ersten und zweiten Hydraulikverbinder mit dem Haupttank zu verbinden.

10. Verfahren zum Steuern des Zu- und Abflusses von Hydrauliköl zwischen der Zwischenkammer (S2) einer Nabe und einem Haupthydrauliköltank eines landwirtschaftlichen oder Arbeitsfahrzeugs nach Anspruch 9, wobei das Verfahren umfasst
- Steuern des Magnetventils, um den Zufluss von Öl zu dem Haupttank zu ermöglichen, wenn der Ölstand in dem Haupttank unter einen vorbestimmten ersten Schwellenwert fällt und umgekehrt
- Steuern der Rückförderpumpe zum Leiten des Hydrauliköls von dem Haupttank zu der Zwischenkammer, wenn der Ölstand in dem Haupttank eine zweite Schwelle überschreitet, die höher als die erste Schwelle ist, und wobei der Ölleitprozess gestoppt wird, wenn ein vorbestimmter Höchststand in der Zwischenkammer erreicht wird.

## Revendications

1. Moyeu de roue (H) d'un véhicule agricole ou de travail comprenant un emboîtement fixe (BL) définissant un axe de développement (X), à l'intérieur duquel un arbre (SH) est associé de manière coaxiale dans un mode rotatif, qui fait face à l'extérieur de l'emboîtement au moyen d'une bride relative (FL) agencée pour un accouplement à une roue de propulsion de véhicule, une chambre intermédiaire étanche (S2) étant définie à l'intérieur du moyeu, et **caractérisé en ce que** l'emboîtement comporte au moins une première ouverture traversante (HC, RHC) approximativement radiale, équipée d'un premier raccord hydraulique relatif, agencé au niveau de ladite chambre intermédiaire, pour introduire ou aspirer de l'huile hydraulique et au moins une deuxième ouverture d'aération traversante (AHC), approximativement radiale.

2. Moyeu selon la revendication 1, dans lequel ladite deuxième ouverture d'aération est pourvue d'une soupape d'aération agencée pour permettre le passage d'air, mais pas le passage d'huile.

3. Moyeu selon la revendication 1, dans lequel le moyeu comprend en outre une troisième ouverture (RHC) et un deuxième raccord hydraulique associé.

4. Moyeu selon l'une quelconque des revendications 1 à 3, dans lequel, entre lesdits emboîtements et ledit rotor, il comprend successivement
- une première chambre (S1) destinée à contenir l'huile hydraulique d'une unité différentielle (DF), et dans laquelle un premier palier (B1) est logé dans ladite première chambre pour un accouplement rotatif du rotor à l'emboîtement,
- ladite chambre intermédiaire (S2), et
- une troisième chambre (S3) dans laquelle sont logés un second palier (B2) et une graisse lubrifiante relative.

5. Moyeu selon la revendication 4, dans lequel ladite troisième chambre est disposée à proximité de l'extrémité libre (FE) du moyeu lorsqu'elle est en conditions de fonctionnement.

6. Moyeu selon l'une quelconque des revendications précédentes, dans lequel ladite chambre intermédiaire (S2) est confinée de manière axiale par une paire de joints étanches à l'huile hydraulique (G1, G2).

7. Essieu de véhicule comprenant une paire de moyeux (H) opposés associés de manière à définir de manière centrale une chambre dans un bain d'huile destinée à loger une unité différentielle (DF), dans lequel chacun desdits moyeux se rapporte à l'une quelconque des revendications 1 à 6.

8. Véhicule agricole ou de travail (VEH) comprenant une transmission de propulsion logée dans un réservoir principal d'huile hydraulique (CB) et un moyeu de roue (H) selon l'une quelconque des revendications 1 à 6, dans lequel ladite première ouverture est reliée de manière fonctionnelle à son réservoir principal par le biais d'au moins un raccordement hydraulique (P1, P2) et au moyen de moyens de commande (V, RP) destinés à commander une entrée et une sortie d'huile hydraulique entre la chambre intermédiaire (S2) et le réservoir principal (CB) d'huile hydraulique.

9. Véhicule selon la revendication 8, dans lequel lesdits moyens de commande d'entrée et de sortie d'huile hydraulique comprennent une électrovanne (V) agencée sur un premier raccordement hydraulique (P1) et une pompe de retour (RP) agencée sur un second raccordement hydraulique (P2), les deux raccords hydrauliques étant agencés pour interconnecter ladite chambre intermédiaire (S2) audit réservoir principal au moyen desdits premier et second raccords hydrauliques.

10. Procédé permettant de commande l'entrée et la sortie d'huile hydraulique entre la chambre intermédiaire (S2) d'un moyeu et un réservoir d'huile hydraulique principal d'un véhicule agricole ou de travail selon la revendication 9, le procédé comprenant
- la commande de l'électrovanne pour permettre l'entrée d'huile dans le réservoir principal lorsque le niveau d'huile à l'intérieur du réservoir principal descend en dessous d'un premier seuil prédéterminé et vice versa
- la commande de la pompe de retour pour transférer l'huile hydraulique du réservoir principal à la chambre intermédiaire lorsque le niveau d'huile à l'intérieur du réservoir principal dépasse un second seuil supérieur au premier seuil, et dans lequel le processus de transfert d'huile est arrêté lorsqu'un niveau maximal prédéterminé est atteint à l'intérieur de la chambre intermédiaire.
